# EUROPEAN PATENT APPLICATION

(11) **EP 1 443 707 A2**
(43) Date of publication of application: **04.08.2004**
(21) Application number: 04002155.2
(22) Date of filing: 30.01.2004
(51) Int. Cl.: H04L 12/28

(54) **Channel decision method, and radio station and terminal device**

(30) Priority: 30.01.2003 JP 2003021256
(71) Applicant: NEC CORPORATION, Tokyo (JP)
(72) Inventor: Domon, Wataru, Minato-ku, Tokyo (JP); Okanoue, Kazuhiro, Minato-ku, Tokyo (JP); Furukawa, Hiroshi, Minato-ku, Tokyo (JP)
(74) Representative: Betten & Resch

(57) **Abstract**

In a radio communication system adapted to decide one channel out of a plurality of radio frequency channels, and to cause communication to be made between a radio base station and a child radio station, decision of the channel is made at a periodic timing in the radio base station to notify information relating to this decided channel to the child radio station. Also, a configuration is made so that whenever the channel is decided and switched, communication quality (interference state) of its channel is detected in an interference quantity determination section 140 to make the channel decision by making a reference to this communication quality as well. By doing so, less communication interruption time occurs, and an influence that is given to communication performance of a wireless LAN can be reduced.

## Description

### BACKGROUND OF THE INVENTION

The present invention relates to a channel decision method, a radio station and a terminal device to be employed for it, and more particularly to channel decision control technology adapted to avoid interference with the other communication system by switching a frequency channel to be used for communication in a radio communication system.

A wireless LAN (Local Area Network) that is excellent in terms of a high speed, convenience, and cost effectiveness is rapidly prevailing as not only a conventional in-house LAN, but also a public access network in a home LAN application and in a public space. In principle, remarkable characteristics of the wireless LAN as compared with a public mobile communication system are that a frequency band requiring no license is utilized and that the number of the available frequency channels is few because of its band being broad (several channels or something like it). Accordingly, because the frequency channel identical to that of the neighboring wireless LAN is used, occurrence of performance deterioration caused by mutual interference between radio signals to be transmitted has posed a problem as the wireless LAN has spread recently.

As one of methods of avoiding performance deterioration caused by such interference is conventionally known a channel decision control method. This is a method of avoiding interference by moving to the other frequency channel that is expected to have less interference deterioration in the event that performance deterioration caused by interference was detected in the wireless LAN that was in operation.

As a conventional example of this channel decision control is known, for example, a non-patent document 1. As shown in a schematic operation sequence of Fig. 18, the channel decision control technique in accordance with this non-patent document is a technique of employing a response request packet and a response packet to investigate the channel for use. That is, in newly establishing the wireless LAN, a wireless LAN station MH 1 selects (decides) one of usable channels, and transmits the response request packet (step S1). In the event that the other wireless LAN in operation using this channel exists already, and that a wireless LAN station MH 3 belonging to its wireless LAN received the response request packet, its wireless LAN station MH 3 transmits the response packet (step S2).

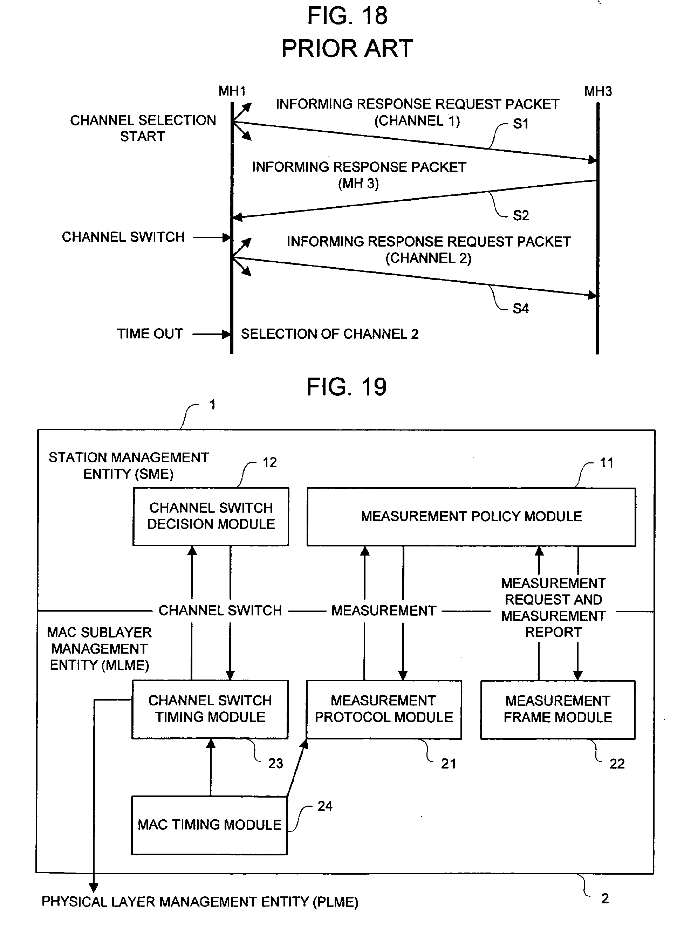

When the wireless LAN station MH 1 that firstly transmitted the response request packet receives the response packet that the other station transmitted, it judges that its channel is already in use by the other wireless LAN, and investigates a use situation of the other channel (in an example of the operation sequence of Fig. 18, a channel 2 from which no response packet was sent back is selected (decided)(step S4).

In addition, the standard relating to the channel selection (decision) control is currently being deliberated in the task group h (hereinafter, described as a TGh) installed within the project 802.11 of the Institute of Electrical and Electronics Engineers (IEEE) that specifies the standard of the wireless LAN. Herein, its summary will be explained briefly based on the draft standard (a non-patent document 2) issued by the TGh.

The TGh is being deliberating the standard of the channel selection control for the purpose of making a 5 GHz band wireless LAN system enacted by the IEEE project 802.11 available in Europe as well. In Europe, it was decided as an requisite that the 5 GHz band wireless LAN was provided with such a function that no influence of interference was exerted on the existing 5 GHz band radar system. A transmit power control (TPC) and a dynamic frequency selection (DFS) are requested as a function for enacting no influence of interference on such a radar system.

The above draft standard (non-patent document 2) specifies the channel selection control on the assumption of a functional block configuration shown in Fig 19. Blocks of the dynamic frequency selection, which are positioned in the management layer of the wireless LAN station, are split and arranged in a station management entity (SME) 1 for managing the entirety of the station and an MAC (Media Access Control) sublayer management entity (MLME) 2 respectively. As to the blocks to be arranged in the SME 1 out of these ones, which have a function of making judgment and instruction for the channel selection control, there are a measurement policy module 11 for managing radio-wave situation measurement for judging whether or not the radar system exists in the adjacent, and a channel switch decision module 12 for making judgment of a channel switch operation.

On the other hand, the blocks for executing a process for the channel selection based on the instruction from the functions arranged in the SME 1 are arranged in the MLME 2. There are a measurement protocol module 21 for measuring the radio-wave situation by the instruction from the measurement policy module, a measurement frames module 22 for making a measurement request to the other station, and for receiving its report, and a channel switch timing module 23 for gauging the timing by the instruction from the channel switch decision module 12 to give instruction of the channel switch to a physical layer management entity (PLME) that is not shown in the figure. In addition, an MAC timing module 24 is for taking timing control of the measurement protocol module 21, and the channel switch timing module 23.

In the channel selection control of the Standard P802.11h/D2.2 are specified the item of the radio-wave situation measurement to be made by employing the blocks arranged in the MLME 2 out of these functional blocks, and a message transmission/reception process for a measurement request, a measured result report, and channel switch notification. On the other hand, as to the functional blocks to be arranged in the SME 1, they are not specified because they are regarded to be out of an object of standardizing its contents, and are left to discretion of an apparatus developer even though its presence is supposed.

### [NON-PATENT DOCUMENT 1]

Kenichi ISHII, et al. "A Proposal of Packet DCA for Wireless LAN System," the 1996 Communications Society, the Institute of Electronics, Information and Communication Engineers, B-652.

### [NON-PATENT DOCUMENT 2]

The Draft Standard P802.11h/D2.2 issued by the task group h of the project 802.11, the Institute of Electrical and Electronics Engineers (IEEE).

In the conventional example of the channel selection (decision) control explained by employing Fig. 18, the problem exists that a communication interruption time occurs in the wake of the channel decision because a response request packet transmission process and a response packet reception wait process are performed by interrupting communication in deciding the channel.

### SUMMARY OF THE INVENTION

An objective of the present invention is to provide a channel decision method that has less communication interruption time and allows deterioration that is given to communication performance of the wireless LAN to be reduced, a radio station and a terminal device to be employed for it, and a program.

A first channel decision method in accordance with the present invention, which is a channel decision method in a radio communication system adapted to decide a channel to be employed for communication out of a plurality of radio frequency channels, and to cause communication to be made between one radio station and the other radio station, is characterized in including: a first step of making decision of said channel at a certain timing in said one radio station; and a second step of notifying information relating to this decided channel to said other radio station.

A second channel decision method in accordance with the present invention, which is a channel decision method in a radio communication system adapted to decide a channel to be employed for communication out of a plurality of radio frequency channels, and to make communication to be made between one radio station and the other radio station, is characterized in including: a first step of employing either a periodic timing or a timing based on detection of interference, or both thereof to make decision of said channel in said one radio station; and a second step of notifying information relating to this decided channel to said other radio station.

A first radio station in accordance with the present invention, which is a radio station for deciding a channel to be employed for communication with the other radio station out of a plurality of radio frequency channels, is characterized in including: channel decision means for making decision of said channel at a certain timing; and means for notifying information relating to this decided channel to said other radio station.

A second radio station in accordance with the present invention, which is a radio station for deciding a channel to be employed for communication with the other radio station out of a plurality of radio frequency channels, is characterized in including: channel decision means for employing either a periodic timing or a timing based on detection of interference, or both thereof to make decision of said channel; and means for notifying information relating to this decided channel to said other radio station.

A radio terminal in accordance with the present invention is characterized in receiving information relating to a channel to be employed for communication that was decided at a certain timing from among a plurality of radio frequency channels in a radio station to employ the channel to be included in this information for communicating with said radio station.

A first program in accordance with the present invention, which is a program for causing a computer to execute an operation of a radio station adapted to decide a channel to be employed for communicating with the other radio station from among a plurality of radio frequency channels, is characterized in including the steps of: making decision of said channel at a certain timing; and notifying information relating to this decided channel to said other radio station.

A second program in accordance with the present invention, which is a program for causing a computer to execute an operation of a radio station adapted to decide a channel to be employed for communicating with the other radio station from among a plurality of radio frequency channels, is characterized in including: channel decision means for employing either a periodic timing or a timing based on detection of interference, or both thereof to make decision of said channel; and means for notifying information relating to this decided channel to said other radio station.

An operation of the present invention will be described. A configuration is made so that, in a radio communication system adapted to decide one channel out of a plurality of the radio frequency channels, and to cause communication to be made between one radio station and the other radio station, decision of the channel is made at a periodic timing in the above one radio station, and information relating to this decided channel is notified to the above other radio station. Further, whenever the channel is decided and switched, an interference state that is communication quality of its channel is detected to make the channel decision in consideration of a timing as well based on this interference. By doing so, less communication interruption time occurs, and an influence that is given to the communication performance of the wireless LAN can be reduced.

### BRIEF DESCRIPTION OF THE DRAWINGS

This and other objects, features and advantages of the present invention will become more apparent upon a reading of the following detailed description and drawings, in which:
Fig. 1 is a system configuration diagram for which the embodiment of the present invention applies;
Fig. 2 is a view illustrating the spectrum of four channels having a band ranging from 5.15 GHz or more to 5.25 GHz or less of which utilization is permitted without acquisition of a user license by the laws and regulations of Japan;
Fig. 3 is a view illustrating the internal configuration of the radio base station 10 in the first embodiment of the present invention;
Fig. 4 is a view illustrating the operational flows of the channel switch notification section 70, the operation channel decision section 80, and the periodic channel decision start section 90 that the radio base station 10 comprises;
Fig. 5 is a view illustrating the format of the channel switch announcement frame to be employed for the channel switch notification to the child radio station in the first embodiment of the present invention;
Fig. 6 is a view illustrating the time variation of the operation channel of the wireless network 130 in the first embodiment of the present invention;
Fig. 7 is a view illustrating the internal configuration of the radio base station 10 in the second embodiment of the present invention;
Fig. 8 is a view illustrating the operational flows of the channel switch notification section 70, the operation channel decision section 80, the periodic channel decision start section 90, and the interference quantity determination section 140 that the radio base station 10 comprises;
Fig. 9 is a view illustrating the time variation of the operation channel of the wireless network 130 in the second embodiment of the present invention;
Fig. 10 is a view illustrating the internal configuration of the radio base station 10 in the third embodiment of the present invention;
Fig. 11 is a view illustrating the operational flow of the channel quality storage section 170 that the radio base station 10 comprises;
Fig. 12 is a view illustrating the time transition of quality of the channel 38 stored in the channel quality storage section 170 in the third embodiment of the present invention;
Fig. 13 is views illustrating the operation channel of the wireless network 130, and the time variation of quality of each channel stored in the channel quality storage section 170 respectively in the third embodiment of the present invention;
Fig. 14 is a system configuration diagram of the present invention in a case where the child radio station executes the function on behalf of the radio base station;
Fig. 15 is a view illustrating the internal configuration of the child radio station (radio station), which executes the function on behalf of the radio base station, in the first embodiment of the present invention;
Fig. 16 is a view illustrating the internal configuration of the child radio station (radio station), which executes the function on behalf of the radio base station, in the second embodiment of the present invention;
Fig. 17 is a view illustrating the internal configuration of the child radio station (radio station), which executes the function on behalf of the radio base station, in the third embodiment of the present invention;
Fig. 18 is a view illustrating the channel decision procedure in the conventional example of the channel decision control; and
Fig. 19 is a view illustrating the functional block configuration in the channel decision control that is in deliberation in the TGh group of the IEEE 802.11.

### DESCRIPTION OF THE EMBODIMENTS

Hereinafter, embodiments of the present invention will be explained in details while a reference to the accompanied drawings is made.

### (FIRST EMBODIMENT)

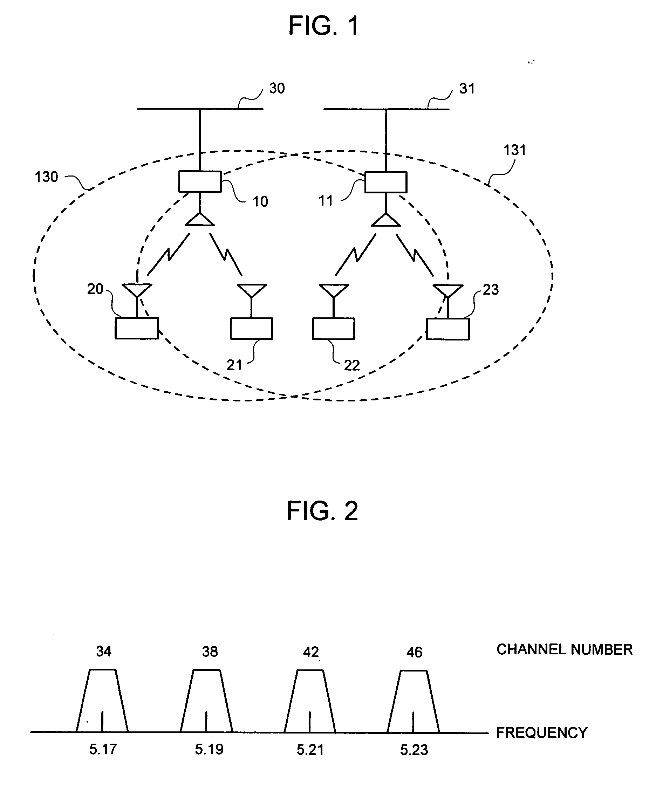

A first embodiment in accordance with the present invention will be explained in details by employing Fig. 1. Herein, it is assumed that a radio base station 10 and child radio stations 20 and 21 configure a wireless network 130 conforming to the Standard 802.11a that is a wireless LAN specification for the 5 GHz band specified by the IEEE.

The radio base station 10 is provided with a function of making mutual connection of this configured wireless network 130 and a wire network 30. Also, similarly, a radio base station 11 and child radio stations 22 and 23 conforming to the Standard 802.11a configure another wireless network 131. The radio base station 11 makes mutual connection of this wireless network 131 and a wire network 31.

The wire network 30 and the wire network 31 are not connected in the layer below the data link layer in this embodiment; however they may be connected. It is assumed that, as shown in Fig. 1, these two wireless networks exist in such an environment that radio signals that the radio base station and the child radio station transmit are mutually transferred up to the radio base station and the child radio station of a partner's wireless network.

Appliances conforming to the Standard 802.11a used in this embodiment correspond to four channels having a band ranging from 5.15 GHz or more to 5.25 GHz or less, of which utilization is permitted without acquisition of a user license by the laws and regulations of Japan. These four channels are channels having a 20 MHz bandwidth with 5.17 GHz, 5.19 GHz, 5.21 GHz, and 5.23 GHz taken as a central frequency respectively as shown in Fig. 2. Further, the channel number as shown in the figure is specified for each channel by the 802.11a specification.

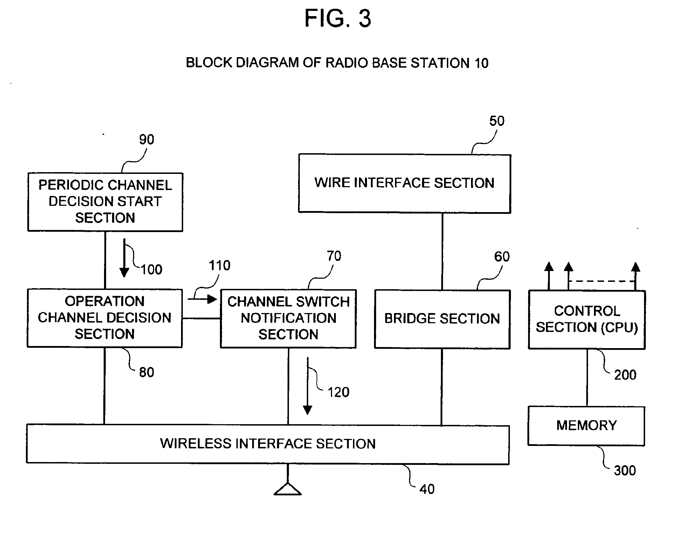

The radio base station 10 having an internal configuration shown in Fig. 3 is used in this embodiment. In addition, it is illustrated with a part of components having a tenuous relation with the present invention omitted in Fig. 3. By referring to Fig. 3, the radio base station 10 has a wireless interface section 40 and a wire interface section 50 mutually connected at a bridge section 60, thereby enabling data communication between the wireless network and the wire network.

Also, after the wireless interface section 40, which is provided with a function of bridging data transfer between the child radio station companions to be connected with the radio base station 10, once receives the above data that a certain child radio station transmitted, it can transmit it to another child radio station that is a destination of its data.

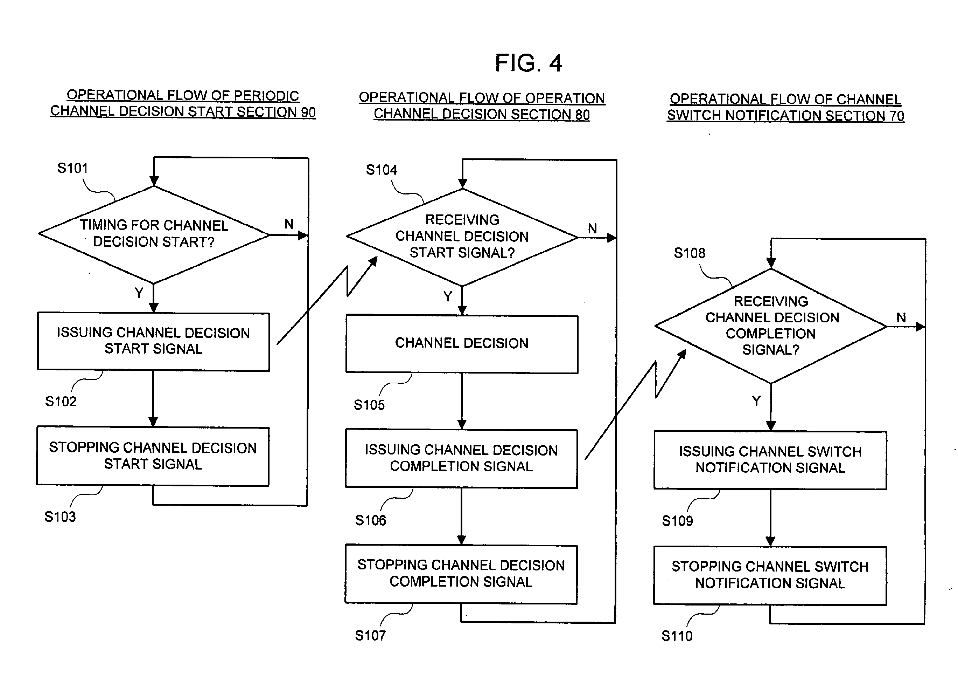

Further, the radio base station 10 also comprises a channel switch notification section 70, an operation channel decision section 80, a periodic channel decision start section 90 that are for the channel decision control. Also, a control section 200, which is a CPU (computer) for controlling each section mentioned above, reads a program pre-filed in a memory 300 to perform a control operation according to its operation procedure. A summary of the operation of theses blocks will be explained by employing a flowchart shown in Fig. 4.

It is confirmed in the periodic channel decision start section 90 whether it is a good timing to start the channel decision process (step S101). This embodiment assumes a specification of such a timing that the channel decision process is started every one minute by means of a timer; however the other timer value may be employed. In the event that it is a good timing to start the channel decision process, the operation proceeds to a step S102, and in the event that it is not a good timing to do so, the operation returns to the step S101. A process of issuing a channel decision start signal 100 is performed in the step S102, and after a constant time elapsed, transmission of the channel decision start signal is stopped in a step S103. After this process is completed, the operation returns to the step S101.

It is confirmed in the operation channel decision section 80 whether or not the channel decision start signal 100 was received in a step S104. While the periodic channel decision start section 90 issues this signal in a step S102, the operation proceeds to a step S105 because its signal is received; however in the event that it is not received, the operation returns to the step S104. The operation channel decision section 80 decides a new operation channel in the step S105. Herein is employed the specification that a new operation channel is decided from among three channels to be obtained by excluding the channel currently in operation from four channels shown in Fig. 2.

When this decision is completed, a channel decision completion signal 110 is issued for a constant time in a step S106, and thereafter its transmission is stopped in a step S107. Afterward, the operation returns to the step S104 once again.

It is confirmed in the channel switch notification section 70 whether or not the channel decision completion signal 110 was received in a step S108. While the operation channel decision section 80 issues this signal in the step S106, the operation proceeds to a step S109 because its signal is received; however in the event that it is not received, the operation returns to the step S108. The channel switch notification section 70 issues a channel switch notification signal 120 in a step S109. In this signal is filed information relating to the new operation channel notified with the channel decision completion signal 110, i.e. the channel number of the above channel, the time it takes before the operation channel is switched over, etc. and these kinds of information are transferred to child radio stations 20 and 21 via the wireless interface section 40.

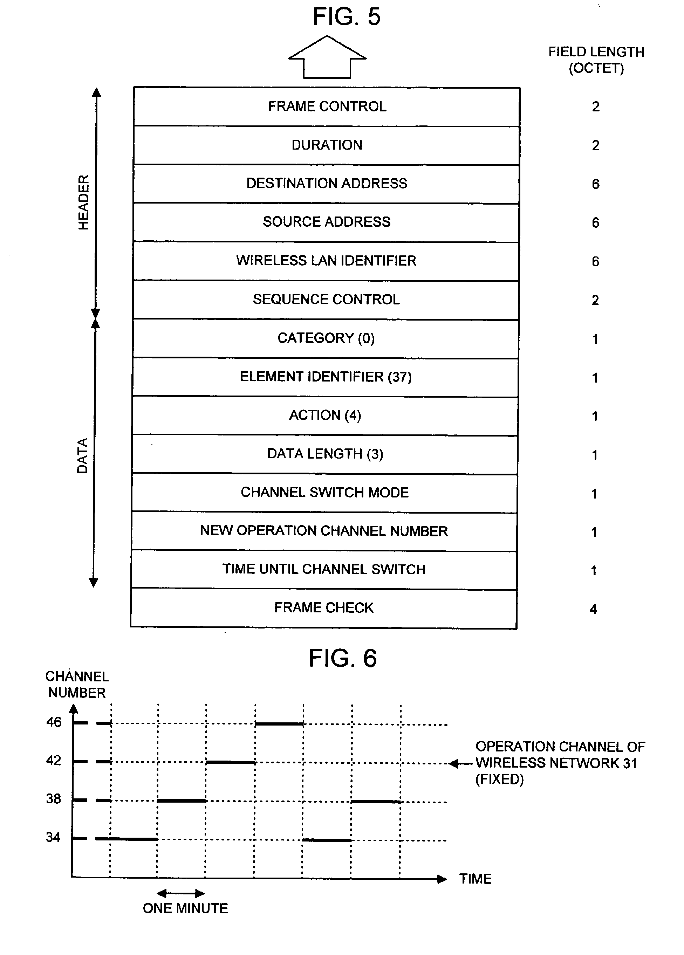

In this embodiment, channel switch notification to this child radio station is made, by employing a form of the channel switch announcement frame specified by the IEEE Draft Standard 802.11 h (version 2.2). In addition, the format of this frame is shown in Fig. 5 for reference. The notification is sequentially transmitted with time in the order of fields shown in the upper part of Fig. 5 to fields shown in the lower part. After a predetermined value is filed in a destination address of the child radio station of this frame (the third one from the top of Fig. 5), a new operation channel number field (the third one from the bottom of Fig. 5), and a field for the time it takes before the channel is switched (similarly, the second one from the bottom) respectively, a signal having this frame format is transmitted. In addition, as to the other fields, its explanation is omitted because they have a tenuous relation with the present invention.

When the process mentioned above is completed, the channel switch notification section 70 stops transmission of the channel switch notification signal 120 (step S110), and the operation returns to a wait state for receiving the channel decision completion signal (step S108).

In addition, the channel decision completion signal 110 to be issued in the operation channel decision section 80, which is also input into the wireless interface section 40, switches over the channel frequency of the wireless interface section 40 when the timing for the channel changeover is reached, thereby making the channel changeover of the radio base station itself.

As to which channel is decided as a new operation channel in the step S105 by the operation channel decision section 80, various ways thereof are considered. In this embodiment, as shown in Fig. 6, such a decision method is employed of moving from the channel having a low frequency to the neighboring channel on the high-frequency side in synchronism with a fixed period having one-minute interval at which the channel decision start signal 100 is issued, and moving to a channel 34 having the lowest frequency at the moment of moving from a channel 46 having the highest frequency.

In addition hereto, it is also considered to employ a method of deciding the operation channel at random for each channel decision. Also, a method may be employed of deciding a new operation channel from among four channels including the operation channel currently in operation.

The radio base station 11 (see Fig. 1) to be employed in this embodiment, which has the internal configuration different from that of the radio base station 10 as shown in Fig. 3, is not provided with a function of switching the channel, and its operation channel is the channel 42 in a fixed manner as shown in Fig. 6. Thus, in this embodiment, throughput deterioration caused by interference results in occurring at the time zone where a wireless network 130 employs the channel of the number 42 as an operation channel. Accordingly, a time ration, at which this interference occurs, amounts to 25 %.

Further, in this embodiment, the advantage exists that the time it takes to interrupt communication for taking the channel decision control, which is only the time it takes to transmit the channel switch announcement frame, becomes extremely short.

In addition, the channel is switched at a one-minute interval in the above-mentioned explanation; however the switch interval of the channel does not always need to be a fixed period.

### (SECOND EMBODIMENT)

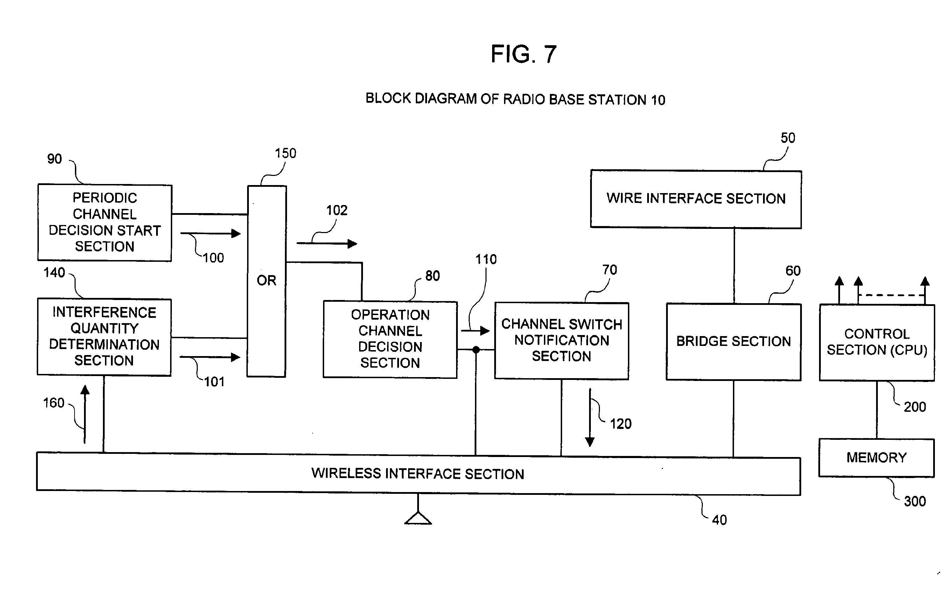

A second embodiment of the present invention will be explained in details. Herein also, the network configuration shown in Fig. 1 is employed similarly to the first embodiment. The wireless LAN specification to be used in this embodiment is also the Standard 802.11a similarly, and the corresponding frequency channels are four channels shown in Fig. 2. However, it is assumed that the radio base station 10 having the internal configuration shown in Fig. 7 is employed in this embodiment.

The portions identical to Fig. 3 are shown with identical codes in Fig. 7, and its explanation is omitted. The radio base station 10 for use in this embodiment has an interference quantity determination section 140 and a logical sum (OR) circuit 150 added to the configuration of Fig. 3 as shown in Fig. 7. That is, a configuration is made so that a logical sum of the channel decision start signal 100 to be transmitted from the periodic channel decision start section 90, and the channel decision start signal 101 to be transmitted from the interference quantity determination section 140 is operated in the logical sum (OR) circuit 150, and a channel decision start signal 102 to be generated thereby is input into the operation channel decision section 80.

The interference quantity determination section 140 is provided with a function of determining a degree of interference from an interference quantity monitoring signal 160 to be output from the wireless interface section 40 to judge whether or not interference should be avoided by switching the operation channel. In the event that it was judged that the operation channel had to be switched, the channel decision start signal 101 is output. Received power of the radio signal transmitted from a radio appliance that does not belong to a wireless network 130 is applied as an interference quantity monitoring signal in this embodiment.

For example, in a case where the radio appliance that does not belong to its own network is transmitting a signal of the channel identical to the channel that its own apparatus (network) uses for communication, when a power level of the above signal received in its own apparatus has amounted to equal to or more than a certain value, it is judged that interference is occurring, and the channel decision start signal 101 is output. Also, the other signal, which is a signal of such a type that size of the interference quantity can be determined, may be employed.

Also, a method of receiving not only information that the radio base station 10 itself measured, but also the measured result of the child radio station as a message to utilize them as the interference quantity monitoring signal 160 from the wireless interface section 40, and a method of making measurement in both of the radio base station 10 and the child radio station are also possible.

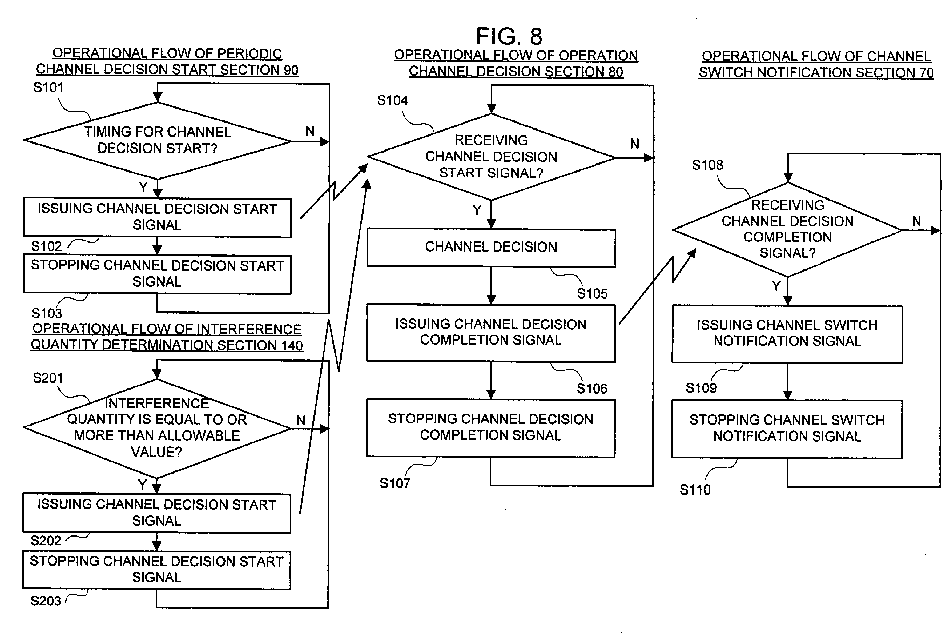

Operational flows of the channel switch notification section 70, the operation channel decision section 80, the periodic channel decision start section 90, and the interference quantity determination section 140 that are for the channel decision control to be taken in the radio base station 10 will be explained by employing Fig. 8. However, the operational flows of the channel switch notification section 70, the operation channel decision section 80, and the periodic channel decision start section 90 are identical to that of the first embodiment shown in Fig. 4, whereby only the operational flow in the interference quantity determination section 140 added newly in this embodiment will be explained herein.

The interference quantity monitoring signal 160 to be output from the wireless interface section 40 is analyzed in the interference quantity determination section 140 to judge whether or not the interference quantity in the operation channel is equal to or more than an allowable value (step S201). In the event that the interference quantity was determined to be equal to or more than the allowable value, the operation proceeds to a step S202, and in the event that it was determined to be less than the allowable value, the operation returns to a step S201. After the channel decision start signal was issued for a constant time in the step S202 in the event that the interference quantity was determined to be equal to or more than the allowable value, its transmission is stopped in a succeeding step S203, and the operation returns to the step S201.

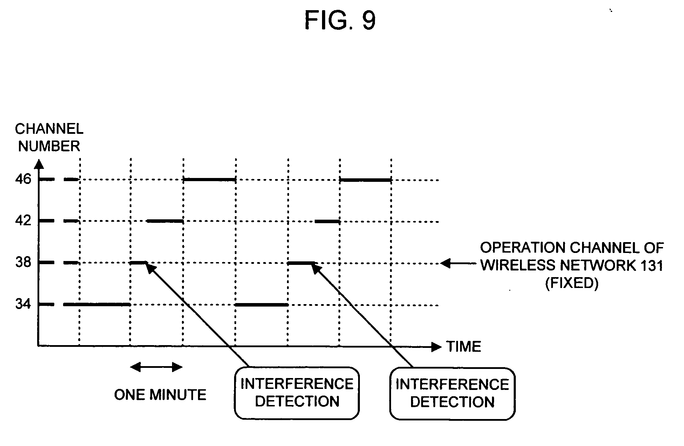

The situation of the time variation of the operation channel of the wireless network 130 in this embodiment is illustrated in Fig. 9. At this time, it is assumed that the channel 38 is employed as an operation channel in a fixed manner in the neighboring wireless network 131. It follows that the radio base station 10 switches the operation channel in synchronism with the channel decision start signal 100 being issued at one-minute interval, and in addition hereto, detects interference for switching the operation channel at the moment that the channel 38 identical to that of the wireless network 131 was decided as an operation channel.

The time it takes before the interference quantity is judged to be equal to or more than the allowable value after the channel was decided is not constant because it varies responding to a communication traffic quantity. In an observed example shown in Fig. 9 are illustrated a case where the channel moved to the other channel fifteen seconds later after moving to the channel 38, and a case where the channel moved to the other channel thirty seconds later after moving to the channel 38. Accordingly, the numerical value of approx. 10% is obtained as an average value of the time ratio at which interference occurs.

Further, in this embodiment, the time it takes to interrupt communication for taking the channel decision control, which is only the time it takes to transmit the channel switch announcement frame, is extremely short.

In addition, the timer having a fixed value of one minute is employed to operate the periodic channel decision start section 90 in this embodiment; however this operational period is not limited to a fixed value, but can be a variable period. Needless to say, it is possible to employ adaptive variable-period setting, for example, setting only the time of staying in the channel having the interference quantity equal to or more than the allowable value at a shorter value, and so on.

### (THIRD EMBODIMENT)

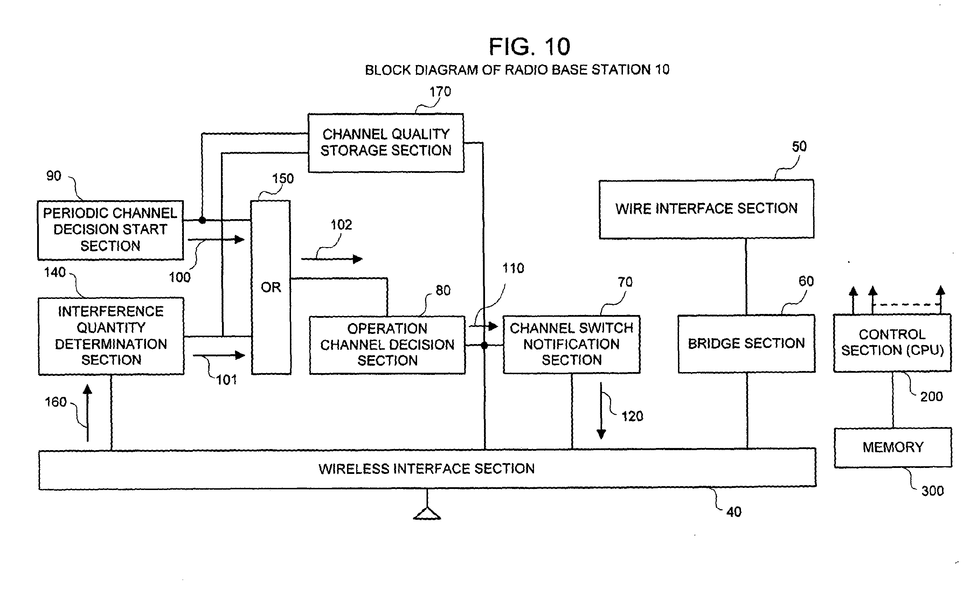

Continually, a third embodiment of the present invention will be explained in details. Herein also, the network configuration shown in Fig. 1 is employed similarly to the first embodiment. The wireless LAN specification used in this embodiment is also the Standard 802.11a similarly, and the corresponding frequency channels are four channels shown in Fig. 2. However, the radio base station 10 having the internal configuration shown in Fig. 10 is employed in this embodiment.

The portions identical to Fig. 3 and Fig. 7 are shown with identical codes in Fig. 10, and its explanation is omitted. In Fig. 10, a channel quality storage section 170 is added to the configuration of Fig. 7, and the operation channel decision section 80 is adapted to make a reference to information 180 as well stored in this channel quality storage section 170 to decide a new operation channel.

The flow in the channel decision operation of the this radio base station is identical to that of the radio base station 10 used in the second embodiment of the present invention shown in Fig. 8; however the characteristic of this embodiment lies in the point that, in the step S105, the operation channel decision section 80 makes a reference to information, which indicates communication quality of each channel stored in the channel quality storage section 170, in the form of the channel quality information 180 at the moment of deciding a new operation channel.

This channel quality storage section 170 comprises a channel decision number counter and an interference number counter responding to each channel, which are not particularly shown in the figure. The former channel decision number counter is a counter having its value counted up by "1" when the decision start of the corresponding channel is made in response to the channel decision start signal 100 or 101 from the periodic channel decision start section 90 or the interference quantity determination section 140. Also, the latter interference number counter is a counter having its value counted up by "1" when the channel decision is started by the interference quantity determination section 140 due to interference detection at the time zone where the corresponding channel remains decided (signal 101).

And, the channel quality storage section 170 employs the numeral values of both of the channel decision number counter and the interference number counter to calculate quality information of each channel for storing its results channel by channel respectively.

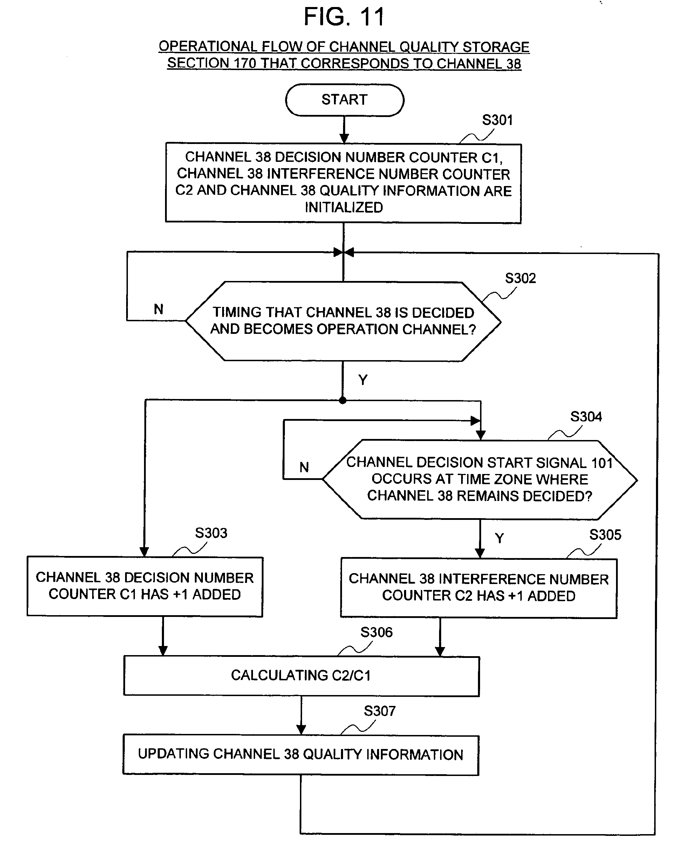

Fig. 11 is a flowchart illustrating the operation of this channel quality storage section 170, and only the operation that corresponds to the channel 38 is illustrated for simplicity in Fig. 11; however as to the other channels, the situation thereof is similar. By referring to Fig. 11, at first, a channel decision number counter C1 and an interference number counter C2, and quality information of the channel 38 are initialized. For example, C1 and C2 are initialized to "0", and also, quality information is initialized to a value (it will be described later, and is "0" in this example) indicating the most excellent state (step S301).

And, at the timing that the channel decision start signal 100 was issued to decide the channel 38, which became an operation channel (step S302), the channel 38 decision number counter C1 has +1 added (step S303). Also, when the channel decision start signal 101 is issued from the interference quantity determination section 140 at the time zone where the channel 38 remains decided (step S304), the channel 38 interference number counter C2 has +1 added (step S305).

Thereafter, computation of C2/C1 is performed (step S306), this computed result is updated and stored as up-to-date quality information of the channel 38 (step S307), and the operation returns to the step S302. This C2/C1 that is quality information is a rate of (the number of times C2 the operation channel was judged to be switched due to interference) to (the number of times C1 the channel was decided). Thus, it follows that the smaller its value is, which indicates less interference, the better quality of the channel is, and that "0" indicates the best state (most excellent quality).

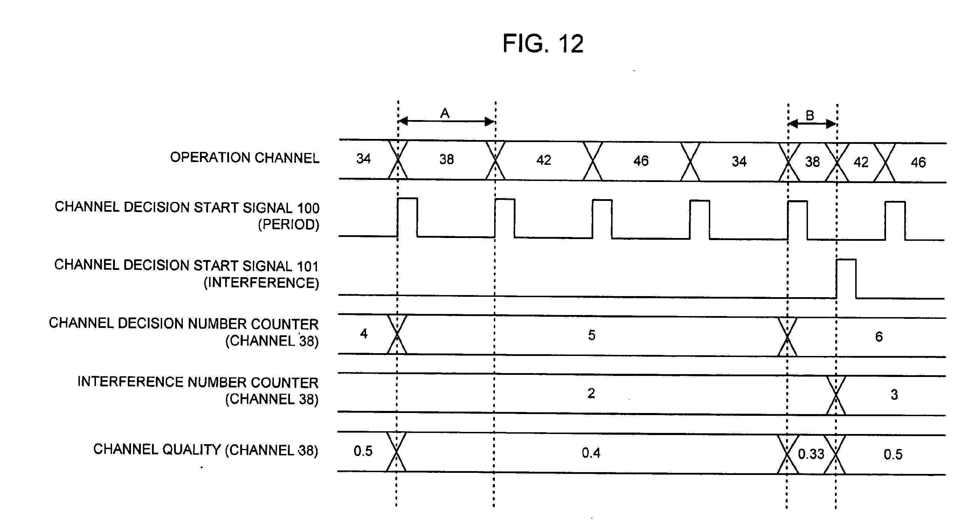

An example of the operation sequence of this embodiment is illustrated in Fig. 12, which represents the time transition of the channel quality in the channel 38. There are two time zones where the channel 38 was decided in the time shown herein. As to one of these two time zones (A in the figure), no channel decision due to the interference detection has been started at the time zone where the channel 38 remains decided, whereas as to the other (B in the figure), the operation channel has moved to the channel 42 due to the interference detection.

In addition, in Fig. 12, it is assumed that the time it takes before the switch of the operation channel is completed after the channel decision start signal was issued is extremely short as compared with the period at which the channel decision start signal 100 is issued.

Continually, how quality information of the channel quality storage section 170 mentioned above is employed in the channel decision process (step S105) of the operation channel decision section 80 shown in Fig. 8 to make the channel decision will be explained in details. In this embodiment, it is assumed that, in the channel decision process (step S105), a method is employed of, out of the channels that can be decided as a new operation channel, deciding the channel having the most excellent quality as a new operation channel by the operation channel decision section 80. In addition, in the event that the channel having the most excellent quality exists in plural, a method of deciding a new operation channel at random from among them is employed together therewith.

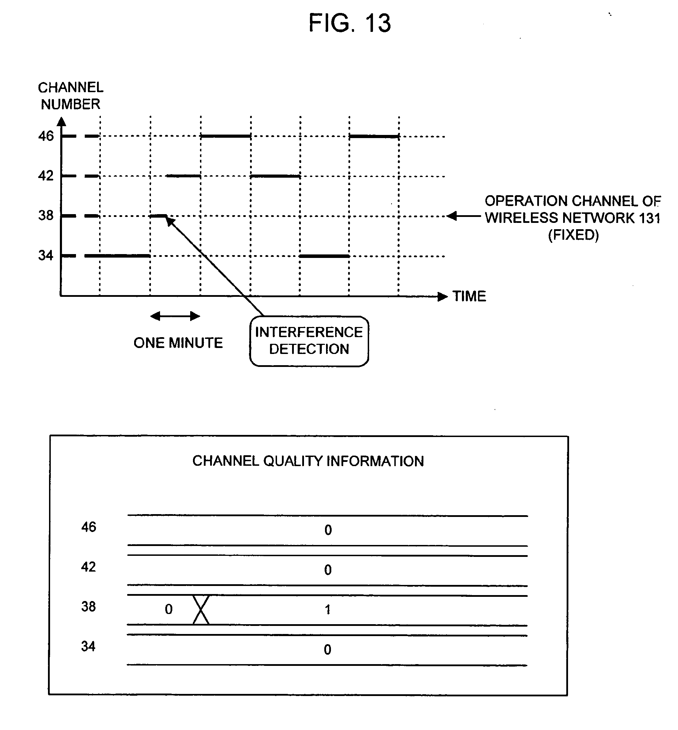

The time transition of the operation channel in the wireless network 130, and the time transition of quality of each channel stored in the channel quality storage section 170 in a case where such a method was applied are illustrated in Fig. 13. Herein, it is assumed that the operation channel of the neighboring wireless network 131 is the channel 38 in a fixed manner. As shown in this figure, in the event that the channel 38 was decided as an operation channel, since the time when interference was detected, the operation channel is decided at random from among the channels 34, 42, and 46 that have no interference detected and have the most excellent quality, whereby no interference deterioration occurs thereafter. Further, in this embodiment, the time it takes to interrupt communication for taking the channel decision control, which is only the time it takes to transmit the channel switch announcement frame, is extremely short.

In addition, in this embodiment, the operation channel currently in use was excluded from choices in deciding a new operation channel; however it is also possible to deciding the operation channel from among the channels including the operation channel currently in use. That is, in the event that the operation channel currently in use is the channel 38, it is also possible to set the channel, which is next decided, at the channel 38.

Further, in this case, in the event that the operation channel currently in use is included in a plurality of the channels having the most excellent quality, adding a method of continuously taking the operation channel currently in use as an operation channel without changeover thereof allows the frequency of the channel switch to be reduced, whereby stability of the system can be improved.

Or, it is also possible to initialize quality information of each channel to be stored in the channel quality storage section 170 not to "0" indicating that quality is in the most excellent state, but to a value more than "0". In this case, if no interference is detected in the channel that was at first decided, quality of this channel is updated into the value that is superior to the other channel, whereby the frequency at which the operation channel is switched to the other channel decreases, and stability of the system can be improved.

Further, it is also possible to apply a method of, by pre-setting the allowable limit of quality, deciding only the channel having quality that is superior to its allowable limit as a new operation channel. In this case, by initializing quality information of each channel to a value that is larger than "0" and smaller than the value indicating the allowable limit of quality, it becomes possible to realize coexistence of deciding only the channel having quality that system tolerates as an operation channel with improving stability of the system.

In this embodiment, quality of the channel having interference once detected becomes inferior as compare with that of the other channels, whereby the problem exists that there is no possibility that its channel is decided again, even though an interference source was thereafter eliminated from its channel. As to this problem, it becomes possible to solve it, by employing a method of, out of events where the channel decision was started due to interference detection, throwing old one away to update channel quality information.

For example, let ten times of the period of the channel decision start signal 100 be specified as a retention time of an interference detection event, it follows that its information is thrown away after the retention time elapses. In this case, even though the channel decision has been never made for the channel of which quality was regarded to be inferior during the time of ten times of the period of the channel decision start signal 100 because the channel decision was started due to interference detection, if the value of the interference number counter is reduced by 1 (one) at this time point, the value of the channel quality amounts to "0" because the value of the interference number counter of the channel having interference once detected is 1 (one), and the above information results in being disregarded. Accordingly, at this point, it becomes possible that this channel becomes a choice of the channel decision once again.

In addition, a technique other than the technique of reducing the value of the counter by 1 (one), which enables the value of the channel quality to be established at "0", may be employed. Also, the switch interval of the channel does not always need to be a fixed period.

### (FOURTH EMBODIMENT)

Continually, a fourth embodiment of the present invention will be explained in details. Herein also, the network configuration shown in Fig. 1 is applied similarly to the first embodiment. The wireless LAN specification to be used in this embodiment is also the Standard 802.11a similarly, and the frequency channels are four channels shown in Fig. 2. Also, the radio base station 10 having the internal configuration shown in Fig. 10 is used similarly to the previous third embodiment.

In this embodiment, a difference with the third embodiment lies in the point of causing the channel quality storage section 170 to store not only quality of the channel, but also information of the time when its quality information was updated. In addition, the so-called time information herein is not a time in a strict sense of the word, and the other information, which is information enabling determination of a relative position relation on the time axis at the time point when a plurality of kinds of quality information were stored, may be employed. For example, it is also possible to employ as time information the value of the counter for increasing the value at a constant period with the value taken as 0 (zero) at the time point when the radio base station 10 was started.

Herein, a specification is employed of deciding the channel of which this time information is oldest as an operation channel in the channel decision process of the operation channel decision section 80 (step S105). The interference quantity fluctuates with time, whereby it is desirable that quality information stored in the channel quality storage section 170 should be new one, if possible. Accordingly, application of this specification allows new quality information to be obtained in a nearly equal state for all usable channels.

However, in this specification, for the reason of giving priority to acquisition of new channel quality, the channel is decided without taking a degree of performance deterioration caused by interference into consideration, whereby it poses a problem that quality of the decided channel is not always excellent. Thus, by applying a method of introducing a threshold indicating the allowable value of the channel quality to decide the channel having the oldest time information from among the channels having quality better than this threshold, it is also possible to solve this problem.

Further, adding the process of disregarding the old interference detection event explained in the third embodiment allows the problem to be solved that no channel having interference deterioration exceeding the allowable value detected results in being decided thereafter.

Whichever method explained herein is applied, the time it takes to interrupt communication for taking the channel decision control, which is only the time it takes to transmit the channel switch announcement frame, is extremely short because pre-acquired quality information is employed in deciding the channel.

It follows that the radio terminal, which is a child radio station in each embodiment mentioned above, receives information relating to the decided channel from the radio base station in communication, and employs the channel to be included in this information for communication. Accordingly, the existing radio terminal is possible to use without substantial alteration of the function in the system as well in accordance with the present invention.

Also, each embodiment mentioned above applies for communication between the radio base station 10 and the child radio stations 20 and 21 as shown in the system configuration of Fig. 1; however also in the event of making direct communication between the child radio stations without using the radio base station, similarly, each embodiment mentioned above can apply. In this case, a certain one child radio station has a function identical to that of the foregoing radio base station, i.e. a channel decision management function and a accumulation function of communication quality information of each channel, and this child radio station acts for the above-mentioned radio base station.

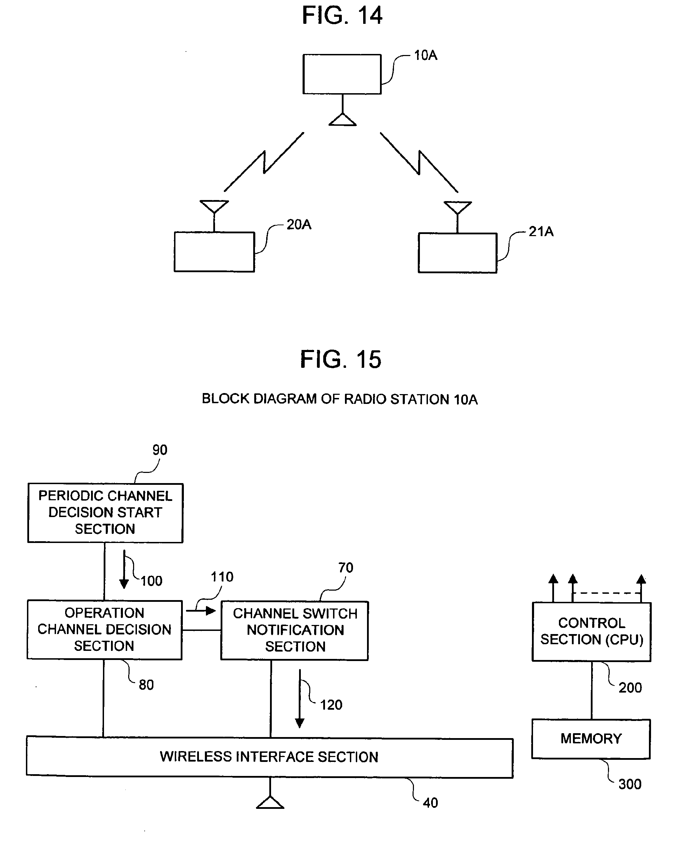

Fig. 14 is a schematic diagram of the system in this case, and the child radio station 10A has a proxy function for the above-mentioned radio base station, and the other child radio stations 20A and 21A have a normal child radio station function. The functional block diagram for realizing the foregoing first embodiment in this child radio station (radio station) 10A is illustrated in Fig. 15, and the portions identical to Fig. 3 are shown with identical codes. The wire interface section 50 and the bridge section 60 of Fig. 3 are deleted in this example.

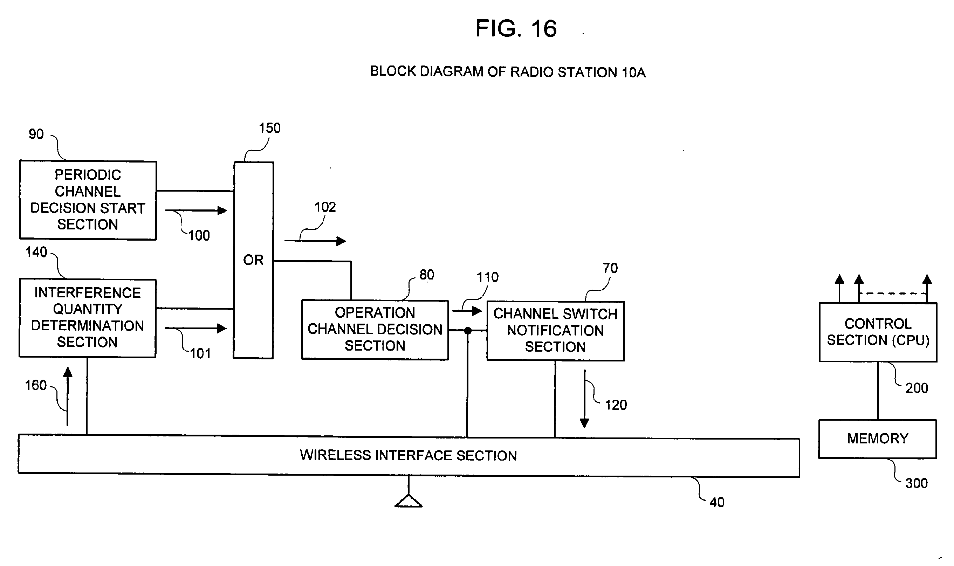

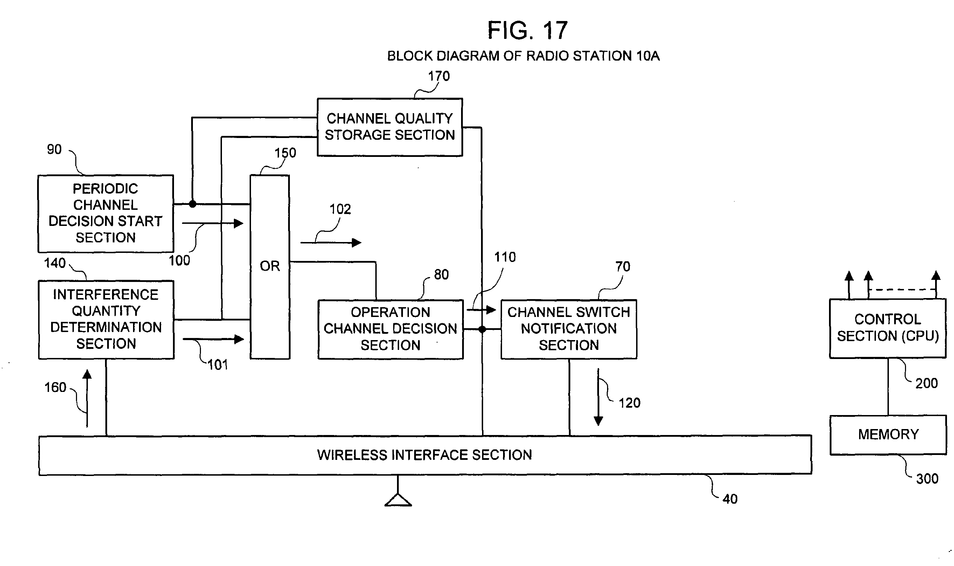

Also, the functional block diagrams for realizing each of the foregoing second and third embodiments in this child radio station (radio station) 10A are illustrated in Fig. 16 and Fig. 17 respectively, and the portions identical to Fig. 7 and Fig. 10 are shown with identical codes. The wire interface section 50 and the bridge section 60 are deleted in these examples as well.

Further, it is apparent that the operational flow explained in each of the above-mentioned embodiments can be realized by pre-storing it in a storage medium as a program to cause the CPU that is a computer to read it for execution.

As mentioned above, in accordance with the present invention, the effect exists that, in a radio communication system adapted to decide a channel to be employed for communication out of a plurality of radio frequency channels, and to cause communication to be made between one radio station and the other radio station, by making a configuration so that decision of the channel is made at a periodic timing in the above one radio station to notify information relating to this decided channel to the above other radio station, less communication interruption time occurs, and also, an influence that is given to communication performance of the wireless LAN can be reduced.

Further, in addition to the above-mentioned effect, the effect exists that, by making a configuration so that, whenever the channel is decided and switched, an interference state that is communication quality of its channel is detected to make the channel decision in consideration of a timing as well based on this interference, it becomes possible to eliminate deterioration in communication quality accompanied by interference.

Further, the effect also exists that making a configuration so that communication quality of each channel is acquired to make the channel decision based on this quality enables the channel decision control, which has less communication interruption time, and yet has the excellent communication quality.

According to an embodiment, in a radio communication system adapted to decide one channel out of a plurality of radio frequency channels, and to cause communication to be made between a radio base station and a child radio station, decision of the channel is made at a periodic timing in the radio base station to notify information relating to this decided channel to the child radio station. Also, a configuration is made so that whenever the channel is decided and switched, communication quality (interference state) of its channel is detected in an interference quantity determination section 140 to make the channel decision by making a reference to this communication quality as well. By doing so, less communication interruption time occurs, and an influence that is given to communication performance of a wireless LAN can be reduced.

## Claims

1. A channel decision method in a radio communication system adapted to decide a channel to be employed for communication out of a plurality of radio frequency channels, and to cause communication to be made between one radio station and the other radio station, said channel decision method comprising:
a first step of making decision of said channel at a certain timing in said one radio station; and
a second step of notifying information relating to this decided channel to said other radio station.

2. The channel decision method according to claim 1, wherein said first step is a step of employing either a periodic timing or a timing based on detection of interference, or both thereof to make decision of said channel in said one radio station.

3. The channel decision method according to one of claim 1 and claim 2, wherein said timing is a timing based on a predetermined constant period or a timing based on a variable period.

4. The channel decision method according to one of claim 1 to claim 3, wherein decision of said channel is adapted to be made at random from among a plurality of the channels.

5. The channel decision method according to one of claim 1 to claim 3, said channel decision method further comprising a third step of acquiring information indicating each communication quality of said plurality of said channels to store it; and
decision of the channel in said first step is adapted to be made based on said quality.

6. The channel decision method according to one of claim 1 to claim 3, said channel decision method further comprising a third step of storing information indicating each communication quality of said plurality of said channels, and information indicating an acquisition time of each quality thereof; and
decision of the channel in said first step is adapted to be made based on at least one of each quality of said plurality of said channels, and this acquisition time of quality information.

7. The channel decision method according to one of claim 5 and claim 6, wherein the channel having less interference is decided in said first step.

8. The channel decision method according to claim 6, said channel wherein the channel having the oldest acquisition time of this quality is decided in said first step.

9. The channel decision method according to claim 6, said channel decision method **characterized in that**, out of the channels of which said quality is superior to a predetermined threshold, the channel having the oldest acquisition time of this quality is decided in said first step.

10. The channel decision method according to one of claim 5 to claim 9, said channel decision method further comprising a fourth step of, whenever said first step is completed, updating at least one of said quality and said acquisition time.

11. The channel decision method according to claim 10, wherein quality of all channels to be stored in said third step is initialized to a value between a value indicating a state of the most excellent quality and a value indicating an allowable limit of quality.

12. The channel decision method according to one of claim 5 to claim 11, wherein said quality is a rate of (the number of times a channel switch was judged to be made due to interference) to (the number of times the channel was decided).

13. A radio station for deciding a channel to be employed for communication with the other radio station out of a plurality of radio frequency channels, said radio station comprising:
channel decision means for making decision of said channel at a certain timing; and
means for notifying information relating to this decided channel to said other radio station.

14. The radio station according to claim 13, wherein said channel decision means comprises a means for employing either a periodic timing or a timing based on detection of interference, or both thereof to make decision of said channel.

15. The radio station according to one of claim 13 and claim 14, wherein said timing is a timing based on a predetermined constant period or a timing based on a variable period.

16. The radio station according to one of claim 13 to claim 15, wherein said channel decision means is adapted to make decision of said channel at random from among a plurality of the channels.

17. The radio station according to one of claim 13 to claim 15, said radio station **characterized in that**:
it further includes storage means for acquiring information indicating each communication quality of said plurality of said channels to store it; and
said channel decision means is adapted to make decision of said channel based on said quality.

18. The radio station according to one of claim 13 to claim 15, said radio station **characterized in that**:
it further includes storage means for storing information indicating each communication quality of said plurality of said channels, and information indicating an acquisition time of each quality thereof; and
said channel decision means is adapted to make decision of said channel based on at least one of each quality of said plurality of said channels, and the acquisition time of this quality information.

19. The radio station according to one of claim 17 and claim 18, wherein said channel decision means decides the channel having less interference.

20. The radio station according to claim 18, wherein said channel decision means decides the channel having the oldest acquisition time of this quality.

21. The radio station according to claim 18, said radio station **characterized in that**, out of the channels of which said quality is superior to a predetermined threshold, said channel decision means decides the channel having the oldest acquisition time of this quality.

22. The radio station according to one of claim 17 to claim 21, wherein said radio station further comprises a updating means for, whenever decision of the channel is completed by said channel decision means, updating at least one of said quality and said acquisition time.

23. The radio station according to claim 22, said radio station **characterized in that** quality of all channels to be stored in said storage means is initialized to a value between a value indicating a state of the most excellent quality and a value indicating an allowable limit of quality.

24. The radio station according to one of claim 17 to claim 23, wherein said quality is a rate (of the number of times a channel switch was judged to be made due to interference) to (the number of times the channel was decided).

25. A radio terminal comprising means for receiving information relating to a channel to be employed for communication that was decided at a certain timing from among a plurality of radio frequency channels in a radio station to employ the channel to be included in this information for communicating with said radio station.

26. A computer-readable program for causing a computer to execute an operation of a radio station adapted to decide a channel to be employed for communicating with the other radio station from among a plurality of radio frequency channels, said program comprising the steps of:
making decision of said channel at a certain timing; and
notifying information relating to this decided channel to said other radio station.

27. A computer-readable program for causing a computer to execute an operation of a radio station adapted to decide a channel to be employed for communicating with the other radio station from among a plurality of radio frequency channels, said program comprising the steps of:
employing either a periodic timing or a timing based on detection of interference, or both thereof to make decision of said channel; and
notifying information relating to this decided channel to said other radio station.
